# EUROPEAN PATENT APPLICATION

(11) **EP 4 394 530 A1**
(43) Date of publication of application: **03.07.2024**
(21) Application number: 23220503.9
(22) Date of filing: 28.12.2023
(51) Int. Cl.: G05B 15/02, E04H 4/14, G05B 19/042

(54) **AUTO-CONFIGURATION OF AQUATIC EQUIPMENT**

(30) Priority: 29.12.2022 US 202263477778 P
(71) Applicant: Pentair Water Pool and Spa, Inc., Cary, NC 27518 (US)
(72) Inventor: LEWIS, Keith, New Hill (US); MILLER, James, Sanford (US); MCCALL, Rodney Byron, Piedmont (US); CHAGANTI, Venu, Cary (US); RAMOS, Anjie, Cary (US); PHY, Andrew, Cary (US)
(74) Representative: Viering, Jentschura & Partner mbB Patent- und Rechtsanwälte

(57) **Abstract**

A connected aquatic equipment system is provided. The connected system includes system components, such as pool equipment, which can be automatically detected and configured based on identification elements and operating parameters of the pool components. The connected system can update the configuration settings of the pool components based on the addition of new pool components. The connected system is also designed to monitor and update the operating parameters of the pool components based, at least in part, on the status and performance of other pool components of the system.

## Description

### RELATED APPLICATIONS

This application claims priority to U.S. Provisional Patent Application No. 63/477,778 filed on December 29, 2022, the entire disclosure of which is incorporated herein by reference.

### FIELD OF THE INVENTION

This disclosure generally relates to a connected system for pool and spa equipment. More specifically, this disclosure relates to a method and a system for automatically detecting and configuring pool and spa equipment.

### BACKGROUND

Many aquatic equipment systems include system components that can have individualized operating parameters. Additionally, many aquatic equipment systems use manual configuration of newly added system components. Existing systems are limited in their monitoring and analytic capabilities. In particular, there is also an ongoing need to monitor the aquatic equipment of an interconnected system and to update the operating parameters of one or more system components based on the interconnected system configuration and/or newly added system components to improve efficiency and prolong the life of the system components. There is also a need for the automatic configuration of new system components.

Existing systems lack the processing systems, including data gathering and analytics techniques to monitor a connected aquatic system, automatically detect and configure new system components, and update the operating parameters of one or more of the existing and newly added system components. Furthermore, there is a need to provide an improved monitoring system that can work with multiple system components and not only for a single device, but that is adapted, scaled, and can accommodate different users, devices, manufacturers, and system configurations.

### SUMMARY

Embodiments described herein are generally directed to a connected aquatic equipment monitoring system that is intelligently automated. The connected system comprises system components, like pool and spa devices, that are designed to detect the presence of other system components and can automatically configure and update the operating parameters of the system components to improve overall system performance. More specifically, the system components can connect to each other and to a central controller that collects and stores data sets, which can then be processed to provide recommended corrective updates. The data sets can include an identification element and one or more operating parameters relating to the specific system component. The information in the data set can be collected using a sensing device.

A method for configuring a connected aquatic system is provided. The method can include determining when a new pool component has been added. The central controller or another pool component determines when the new pool component has been added. The method can include accessing a stored lookup table that relates a pool component of the connected aquatic system to an identification element and one or more operating parameters. The method can include identifying, using the stored lookup table, a recommended corrective update to one or more pool components associated with manufacturer operating parameters, sensed operating parameters, historical data, user data, or other data types associated with the pool components. The method can include updating, by the central controller or another pool component, the settings of the new device to perform according to updated operating parameters based on the configuration of the other pool components in the overall connected aquatic system.

In another embodiment, the system can also include a diagnostic module, wherein the diagnostic module includes or integrates with one or more advanced data processing modules. The diagnostic module can utilize the one or more advanced data processing modules to identify issues with one or more pool components and provide a customized recommendation for addressing the issues.

In one aspect, a method for configuring a connected aquatic system is provided. The method includes receiving a data set including an identification element of a pool component and an operating parameter of the pool component. The identification element and the operating parameter of the pool component can be extracted using a processor of a central controller. The method can further include initiating a configuration process to analyze the operating parameter of the pool component. A proposed update to the operating parameter can be identified based on an output of the configuration process. An update process can be initiated to execute the proposed update and the operating parameter of the pool component can be updated based on the output of the update process.

In some forms, the configuration process can include determining if updated operating parameters are recommended to improve system performance for the connected aquatic system. In some embodiments, the configuration process further includes analyzing the operating parameter of the pool component using an advanced analytics module configured to determine a recommended operating parameter based on other pool components connected to the connected aquatic system. In some aspects, the advanced analytics module is provided in a form of an iteratively trained learning module. In some embodiments, the method also includes receiving user data including trend data, user preferences, a schedule, or a combination thereof. The configuration process can analyze the user data when identifying the proposed update to the operating parameter. In some aspects, the pool component is a first pool component with a first identification element, the data set is a first data set, and the operating parameter is a first operating parameter and the method can include receiving a second data set including a second identification element of a second pool component and a second operating parameter of the second pool component. The second identification element and the second operating parameter of the second pool equipment can be extracted using the processor of the central controller. The method can further include initiating a configuration process to analyze the second operating parameter of the second pool component. A proposed update to the operating parameter can be identified based on an output of the configuration process. An update process can be initiated to execute the proposed update and the first operating parameter of the first pool component and the second operating parameter of the second pool equipment can be updated based on the output of the update process. In some forms, the first pool component is configured to detect and identify the second pool equipment.

In another aspect, a connected aquatic system is provided. The system can include a first pool component with a first identification element and a second pool component with a second identification element. The system can also include a first sensing device designed to collect a first data set including operating parameters of the first pool component and a second sensing device designed to collect a second data set including the operating parameters of the second pool component. The system can further include a central controller designed to automatically detect and configure the first pool component and the second pool component based on the operating parameters of the first pool component and the second pool component.

In some forms, the system further includes a database configured to store user data. The system can also include an advanced analytics module of a server configured to process the user data to update a configuration setting of the first pool component and the second pool component. In some aspects, the advanced analytics module can be provided in the form of an iteratively trained learning module. The system can also include a deployment module of a server configured to generate and transmit a notification to a third-party system using a notification module. In some aspects, the notification can include a service request to repair or replace the first pool component or the second pool component. In some forms, the first data set and the second data set are stored in a database provided in the form of a lookup table. In some embodiments, the database can include an update lookup module configured to communicate with an advanced analytics module to determine whether the operating parameters should be updated. The database may also include an output lookup module configured to store the operating parameters detected by the first sensing device and the second sensing device.

In another aspect, a method for configuring a connected aquatic system is provided. The method can include providing a first pool component defined by a first identification element and a first operational parameter and connecting the first pool component to a controller. A second pool component defined by a second identification element and a second operational parameter can be provided. The method can further include automatically connecting the second pool component to the controller and the first pool component via the second identification element. The first operational parameter can be adjusted in response to the second pool component connecting to the controller.

In some embodiments, the method also includes adjusting the second operational parameter based on the first operational parameter associated with the first pool component. In some forms, the first identification element is provided in the form of a QR code. In some aspects, the QR code is pre-configured with user data provided in the form of at least one of a name, number, device type, address, or model type. In some embodiments, the QR code is pre-configured with user data provided in the form of at least one of a name, number, device type, address, or model type.

### DESCRIPTION OF THE DRAWINGS

FIG. 1 is a schematic diagram of a connected aquatic system according to disclosed embodiments;
FIG. 2 is a schematic diagram of another embodiment of the connected aquatic system of FIG. 1;
FIG. 3 is a block diagram of an aquatic equipment portion of the connected aquatic system of FIG. 1;
FIG. 4 is a block diagram of a schematic of system components of the connected aquatic system of FIG. 1;
FIG. 5 is a block diagram of a control system of the connected aquatic system of FIG. 1;
FIG. 6 is a flow diagram of a device identification process of the connected aquatic system of FIG. 1;
FIG. 7 is a flow diagram of a device configuration process according to disclosed embodiments;
FIG. 8 is a flow diagram of a device parameter update process of the connected aquatic system of FIG. 1; and
FIG. 9 is a flow diagram of the process for connecting and configuring additional devices of the connected aquatic system of FIG. 2.

### DETAILED DESCRIPTION

Before any embodiments of the system are explained in detail, it is to be understood that the system is not limited in its application to the details of construction and the arrangement of components set forth in the following description or illustrated in the following drawings. The system is capable of other embodiments and of being practiced or of being carried out in various ways. Also, it is to be understood that the phraseology and terminology used herein are for the purpose of description and should not be regarded as limiting. The use of "including," "comprising," or "having" and variations thereof herein is meant to encompass the items listed thereafter and equivalents thereof as well as additional items. Unless specified or limited otherwise, the terms "mounted," "connected," "supported," and "coupled" and variations thereof are used broadly and encompass both direct and indirect mountings, connection supports, and couplings. Further, "connected" and "coupled" are not restricted to physical or mechanical connections or couplings.

The following discussion is presented to enable a person skilled in the art to make and use embodiments of the system. Various modifications to the illustrated embodiments will be readily apparent to those skilled in the art, and the generic principles herein can be applied to other embodiments and applications without departing from embodiments of the system. Thus, embodiments of the system are not intended to be limited to embodiments shown but are to be accorded the widest scope consistent with the principles and features disclosed herein. The following detailed description is to be read with reference to the figures, in which like elements in different figures have like reference numerals. The figures, which are not necessarily to scale, depict selected embodiments and are not intended to limit the scope of embodiments of the system. Skilled artisans will recognize the examples provided herein have many useful alternatives and fall within the scope of embodiments of the system.

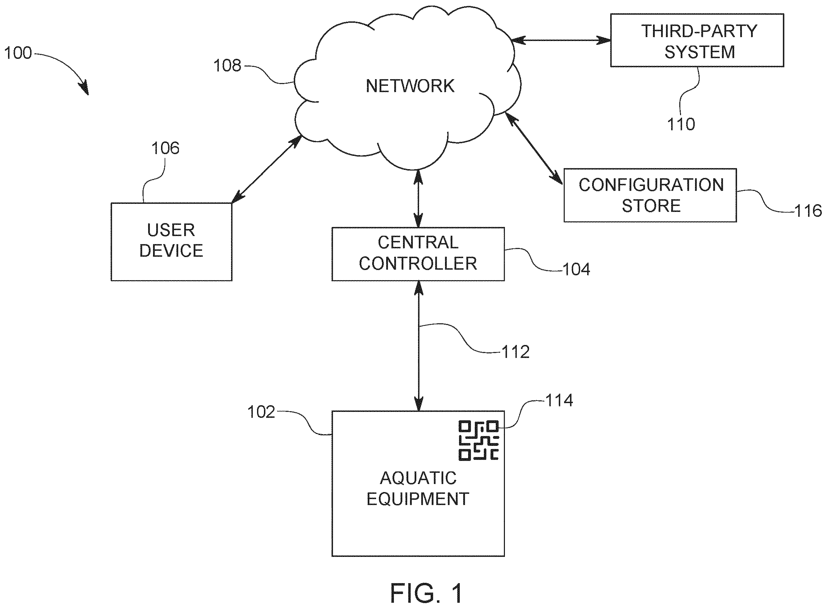

FIG. 1 illustrates an exemplary connected aquatic system 100 (hereinafter "connected system"), according to disclosed embodiments. When used throughout the disclosure, it will be understood by one skilled in the art that an "aquatic system" can include, for example, a pool or spa system, or similar. As seen in FIG. 1, the connected system 100 can include an aquatic equipment system component 102, a central controller 104, a user device 106, a configuration store 116 and a network 108 designed to communicate with one or more third-party systems 110.

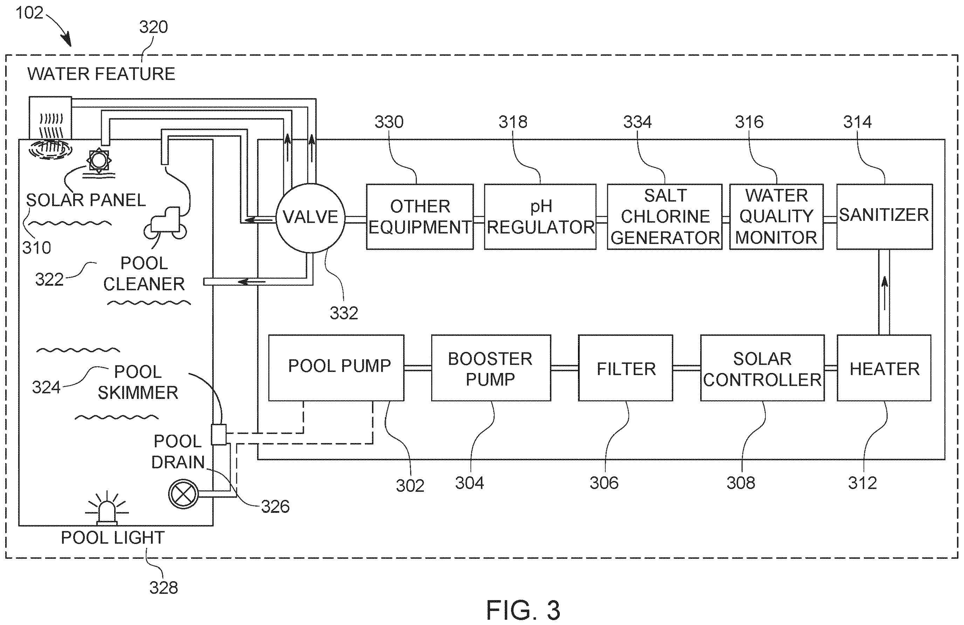

The aquatic equipment system component 102 (hereinafter "system component") can include any residential device having a communication port, radio, wired, or wireless communication module. Furthermore, as described in more detail in connection with FIG. 3, the system component 102 can include, for example, a pool component, pool equipment, a sensor, a valve, a pump having a variable frequency drive (VFD) and/or variable speed drive (VSD), a monitoring device or detector, various communication enabling devices, and/or other electrically controllable pool or spa related devices or components.

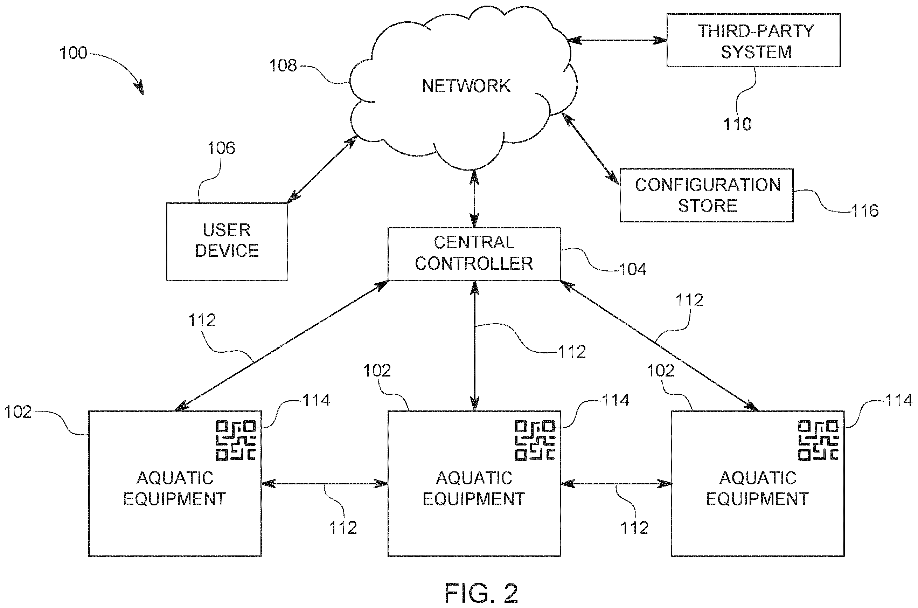

The system component 102 can be connected to the network 108, and controlled by the central controller 104, the user device 106, and/or another system component 102, as shown in FIG. 2. The connected system 100 can provide monitoring and control of the system component 102 and communicate the monitored information to assist in efficient identification of the system component 102 and provide intelligent recommended corrective action, and initiate system updates to the system component 102. If the connected system 100 identifies that the system component 102 is malfunctioning or operating outside of a predefined acceptable operational range, the system can communicate the monitored information related to maintenance, service, or other issues, initiate deployment of service requests, and generate a user notification(s). In at least this way, the connected system 100 can provide advanced analytics for identifying overall system health and identify inefficiencies in the operating parameters of the system component 102 and facilitate an update to the configuration settings of the system component 102 to improve the performance of the overall connected system 100.

The system component 102 can also be removed, turned off, disabled, or similarly disconnected from the system component 102 for a fixed time period, or indefinitely. In this example, the connected system 100 can provide monitoring and control of the other aspects of the system components 102 and provide proposed corrective action to the operating parameters to improve or maintain the performance of the connected system 100 when the system component 102 has been disconnected. In some embodiments, the data set(s) associated with the removed system component 102 may be stored, maintained, or similarly stored. In some embodiments, the data set(s) associated with the removed or disconnected system component 102 can be deleted, archived, or similar after a pre-defined amount of time or upon instruction by the user, third party, or similar.

As shown in FIG. 2, the connected system 100 can include multiple aquatic system components 102 that are in communication with one another in addition to being connected to the overall connected system 100. Furthermore, the connected system 100 can include communication modules 112 to connect the system components 102 to each other and to a central controller 104, creating a monitoring system that is adaptable, scalable, and can accommodate different users, devices, manufacturers, and system configurations. The connected system 100 can be used to automatically identify and configure the operating parameters and other baseline system component 102 settings when a new device is introduced to the connected system 100.

The system components 102 can be in communication with other aspects of the connected system 100 to send and receive data sets and can otherwise be connected to provide dynamic monitoring and control of various aspects of the connected system 100. When used throughout the present disclosure, it will be recognized by one skilled in the art that "data sets" can include but is not limited to, one or more data elements, single variable data, data points, measurements, images, settings, configurations, parameters, commands, notifications, metrics, readings, similar data component, or any combination of these, or any other information or data.

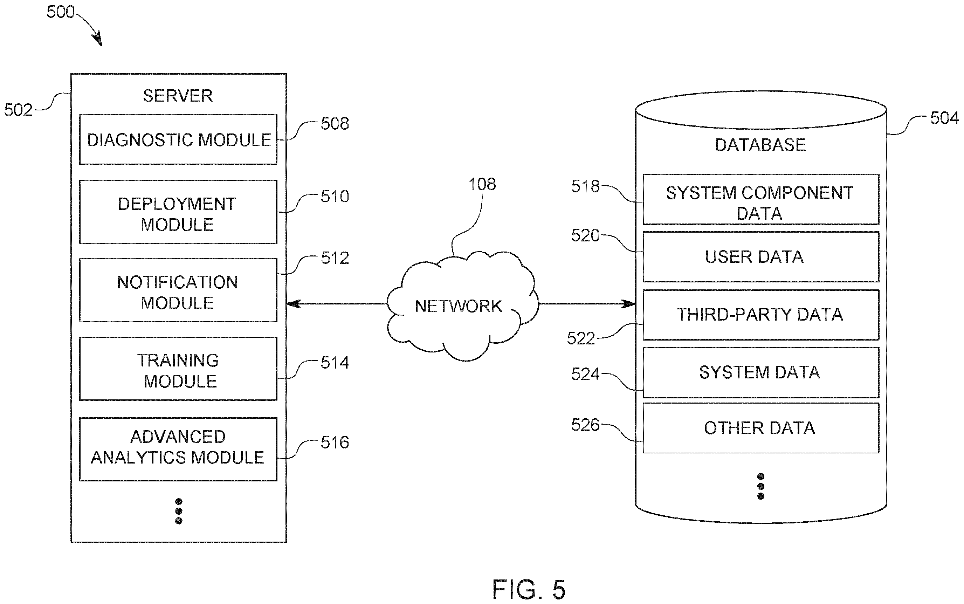

In some embodiments, the system components 102 can interface with the user device 106 either directly over a wired or wireless connection or a connection to the central controller 104. The user device 106 can interface with the central controller 104 either directly over a connection or via a connection to the network 108. Similarly, the central controller 104 can include a control system 500 and/or processing system, as described with reference to FIG. 5. In some embodiments, the central controller 104 can interface with the control system 500 and/or processing system via a connection to the network 108 or a connection between one or more of the system components 102.

The system components 102 of the connected system 100 can communicate directly with one another using a network 108 interface, local network, or other communication connection, and are not limited to the communication connections 112 shown in FIGS. 1 and 2. In some embodiments, the communication connection 112 is provided in the form of a wireless module integrated with or coupled to the system components 102. One skilled in the art will recognize that a communication connection can include, for example, a connection that can transmit and receive data using a communication protocol. Non-limiting examples of the communication connection 112 include: wired, wireless, Bluetooth, cellular, satellite, Wi-Fi, GPS, RS-485, RJ45, RF, MODBUS, CAN, CANBUS, DeviceNet, ControlNet, Ethernet TCP/IP, RS-232, Universal Serial Bus (USB), Firewire, Thread, proprietary protocol(s), or other communication protocol(s) as applicable.

The system components 102 can communicate without an internet or network connection, allowing for future expansion and increased adaptability when adding and configuring new system components 102. The system components 102 may be removed or otherwise disconnected from the connected system 100, similarly allowing for the connected system 100 to automatically reconfigure the operating parameters of one or more system components 102. The system components 102 can also communicate together wirelessly and complete configuration processes via a mobile application or other connected wireless devices. In some embodiments, the communication connection(s) 112 can include unified messaging protocol(s) to allow for future expansion and increased adaptability when adding and configuring new system components 102. In some embodiments, the system components 102 can include a Wi-Fi module, or similar, to transmit data between the system components 102 wirelessly, even if there is no internet connection. The communication between the system components 102 can take place through the user's Wi-Fi router, or similar mesh system, using standard network protocols. The mesh network configuration can allow for direct communication in a mesh-connected system 100 without an internet collection and may allow for reduced traffic through a gateway while maintaining inter-device communication even if internet access is interrupted. In some embodiments, a master/slave configuration can be used to designate specific communication devices.

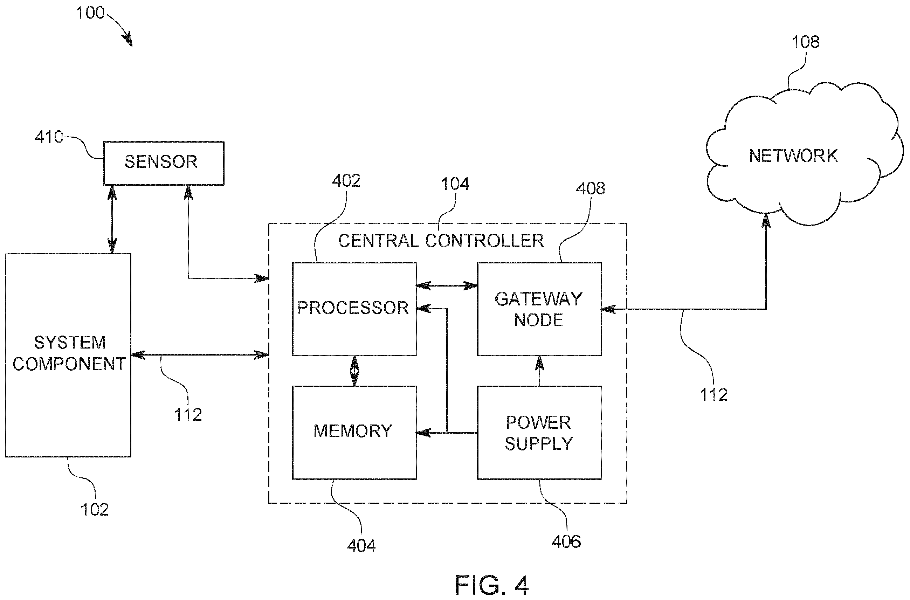

The central controller 104 can be provided in the form of a data-processing device located proximate to the connected system 100 and designed to transmit and receive data from the system components 102. For example, in some embodiments, the central controller 104 can act as a network 108 interface to create a communication link 112 that operatively connects the system components 102 and the user device 106 over the network 108. In another embodiment, the system components 102 can also act as a network 108 interface and create a communication link 112 directly to the other system components 102 and the central controller 104. As described in more detail in connection with FIG. 4, the central controller 104 can be provided in the form of a gateway, hub, switch, router, server, switch, or other connected device to allow integration, monitoring, and control of multiple aspects of the connected system 100. The individual system components 102 can likewise be configured to monitor and control the other aspects of the connected system 100.

The central controller 104 can receive data from the system components 102, extract information from the data, and store the data in a database 504 or lookup table of the connected system 100, as described in more detail in connection with FIGS. 4-5. The lookup table can extract information from the data according to characteristics, parameters, settings, or similar configurations associated with a single data element or a particular system component 102. For example, a system component 102 can transmit the data set to the central controller 104. The central controller 104 can receive the data set and extract the data according to a characteristic, including but not limited to sensor data, a timestamp for the sensor data, an identification element 114 for the system component 102, user data 520 associated with the system component 102 (e.g., install date, geographic location, etc.), usage data, an error code, etc. The extracted data can be transmitted from the central controller 104 and stored in the database 504 or lookup table. In some embodiments, as described in connection with FIG. 4, the data set can be processed by the database.

A user can access data from the connected system 100, stored in the database 504 or lookup table. In one embodiment, the user can request customized reports with data from the connected system 100 and/or from individual system components 102. As a non-limiting example, the user can request a usage report containing runtime and power consumption for a specific system component 102 associated with the user's connected system 100. The user can also request recommended system configuration updates that can either be implemented automatically or updated manually by the user. For example, this can include a schedule or setting updates for system component 102 runtime or downtime. In another example, the user can request a maintenance report including recommended maintenance procedures, timelines, and parts identified to fulfill a manufacturer's recommended maintenance procedures for one or more system components 102 of the user's connected system 100. The data from the connected system 100, including but not limited to sensor data described in connected with FIG. 3, can also be accessed using the user device 106.

The user device 106 can be any device capable of connecting to the Internet. In one embodiment, the user device 106 is a portable device like a smartphone or tablet, a computer, or another display interface. In some embodiments, the user device 106 can include or is otherwise connected to, a programmable processor 402, a network 108 interface, data capture elements, and a memory unit 404 (see FIG. 4). In some embodiments, the data capture elements can include a microphone, a camera, a vibration sensor, or any combination thereof. The user device 106 can include a Wi-Fi, Bluetooth, cellular, or similar wired or wireless communication link 112 used to communicate with a network 108. Furthermore, in some embodiments, the user device 106 can include program instructions that are stored on a user device 106 non-transitory computer-readable medium and can be executed by the programmable processor 402 to perform the processes described herein.

In one embodiment, a user can install an application on their portable device or display interface to access data associated with a user account. A user can set up a user account when the user registers or installs a connected system 100 or a new system component 102. When a new system component 102 is identified by the connected system 100, either automatically or manually by the user, the system component 102 is associated with the user account. The user can further configure other aspects of the connected system 100 to be associated with the given user account to send and receive data associated with the user's specific system components 102. A user account can contain personal information including user data 520 processed by the system as information extracted from a data set, as described in more detail in connection to FIG. 5. It will be understood by one skilled in the art that "account" can also mean record, profile, or similar.

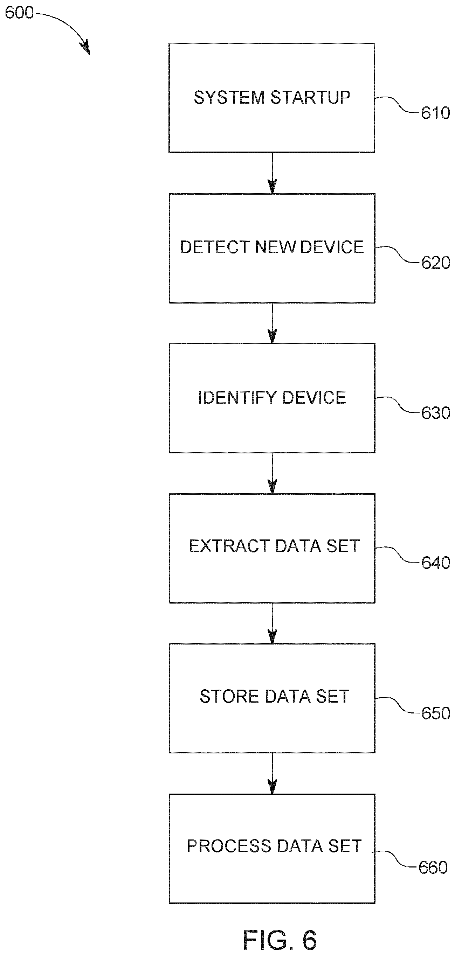

A user can register a system component 102 to be associated with the user account. In one example, the user (e.g., homeowner, pool or spa owner, manufacturer, dealer, installer, and the like) can enter information about the system component 102 at the time of installation, or anytime thereafter, such as the manufacturer or other system component data 518 (see FIG. 5). When used throughout the disclosure, one skilled in the art will recognize that "dealer" can include, but is not limited to, a third-party capable of providing service, parts, and/or technician(s) to assist a user in the repair or replacement of system components 102 or routine maintenance. In some examples, the user could scan a receipt, barcode, quick response ("QR") code, radio-frequency identification ("RFID") tag, serial number, or another identification element 114 on the system component 102 or the packaging to register a system component 102 with a user account. In some embodiments, an image of the system component 102, or an aspect thereof, can be used to identify the system component 102 and/or the identification element 114 associated with the system component 102. In some forms, if the system component 102 does not include an identification element 114, the system can automatically assign a unique label and/or the identification element 114 for the system component 102. In one embodiment, the system component identification element 114 and associated system component data 518 can be extracted and stored in the database 504 or lookup table, as described in more detail in connection to FIGS. 5 and 6.

As described in more detail below, the information extracted when a new system component 102 is introduced to the connected system 100 of a user account can be used to provide analytic information to the connected system 100 and authorized third-party systems 110. The extracted information can be used to assess the overall performance of the connected system 100 and individual system components 102. The extracted information can be analyzed with the operating parameters of the connected system 100 and individual system components 102 to provide recommended corrective action and implement system updates to improve overall system performance and reduce inefficiencies.

The overall system performance and inefficiencies can be determined or evaluated based on several non-limiting factors, including system component 102 type and size (e.g., flow, speed, British Thermal Unit ("BTU") size, chlorine output, etc.), energy cost (e.g., energy cost per kilowatt hour based on user's zip code and/or utility provider), pool size, pipe size and type, system performance metrics (e.g., pressure, flow, filter media, etc.), seasonal weather data (e.g., water temperature, air temperature, rain, wind, etc.), the number of skimmers (or other system components like heaters), the filter model/type, etc.

The user device 106 can be connected to the system components 102 and the central controller 104 to receive alerts or notifications related to the operation, functionality, and maintenance of the system components 102. The user device 106 can also be used to send information to the control system 500 or authorized third parties via the network 108 to assist in diagnostics, one example. This process is described in more detail in relation to FIG. 11.

In some embodiments, the network 108 is located proximate to the system components 102. The network 108 includes, for example, the Internet, intranets, extranets, wide area networks ("WANs"), local area networks ("LANs"), wired networks, wireless networks, cloud networks, or other suitable networks, or any combination of two or more such networks. For example, such networks can include satellite networks, cable networks, Ethernet networks, and other types of networks. In one embodiment, the network 108 is an isolated private network utilizing a private Internet Protocol ("IP") address and limiting access to the network 108. In some embodiments, the network 108 can include one or more computing devices that can be arranged, for example, in one or more server banks, computer banks, or other arrangements. Information related to the network 108, including connectivity status, speed, security, connected devices, wireless interface, etc. can be communicated to other aspects of the connected system 100 as a data set, as described in more detail in connection with FIG. 5.

The configuration store 116 can be provided in the form of a database or lookup table, describe in more detail in connection with FIG. 5. The configuration store 116 is configured to retain updated versions of the configuration settings of the system components 102. In some embodiments, the configuration store 116 can include user-defined configurations. The one or more system components 102 can access and retrieve any configuration at any revision using the network 108. In this non-limiting example, the system components 102 can retrieve a configuration setting from the configuration store 116 and update the configuration settings and operational parameters automatically. In some aspects, the system components 102 can retrieve a default configuration (e.g., baseline configuration, manufacturer default settings, etc.). The configuration store 116 can reside in the cloud, on the network 108, in the central controller 104, or any other suitable location. The configuration store 116 can be configured to manage individual configurations for each of the system components 102. The configuration store 116 can also allow an authorized user to visualize the device configurations. In some embodiments, the configuration store 116 can generate a system overview of each of the systems components 102 connected to the system 100, including details and other information related to the system component data 518, and/or the individual configuration settings for each system component 102.

FIG. 3 illustrates an example of the system components 102 that comprise an example aspect of a connected aquatic monitoring system according to disclosed embodiments. The system components 102 are provided in communication with each other and the pool or spa to form a fluid circuit. The fluid circuit facilitates water movement from the pool or spa through the system components 102 and the fluid circuit to accomplish various tasks including, for example, pumping, cleaning, heating, sanitizing, lighting, and similar. Additional arrangements of the connected system 100 besides those shown in FIGS. 1-3 are also contemplated.

As seen in FIG. 3, the system components 102 can include one or more of the following devices utilized for operating and maintaining a residential aquatic system like a pool or spa: a pool pump 302, a booster pump 304, a filter 306, a solar controller 308, one or more solar panels 310, a heater 312, a sanitizer 314, a water quality monitor 316, a pH regulator 318, a water feature 320, a pool cleaner 322, a pool skimmer 324, a pool drain 326, a pool light 328, a salt/chlorine generator 334, and other equipment 330. The system components 102 can further include one or more valves 332 to control the individual system components 102. The valves 332 can be controlled manually or remotely via the user device 106, the central controller 104, individual system components 102, or any combination thereof.

Each of the system components 102 can include an identification element 114, as seen in FIGS. 1 and 2. The identification element 114 can be assigned by the manufacturer, include a product serial number, be assigned when a user registers the component, or otherwise be associated with a specific user account after installation. Each of the system components 102 can further include a sensing device 410 (see FIG. 4). The sensing device 410 can be provided in the form of an integrated sensor, an external sensor, a sensing unit coupled to or in communication with the system component 102, or a combination thereof. It will be understood by those having skill in the art that the term "sensing device" as used throughout the specification can include several different sensing devices, sensing device configurations, or other monitoring devices. This can include a sensor unit with an individual sensor, a sensor unit with multiple sensors, a single sensor with multiple sensing capabilities, or a combination thereof.

In various embodiments, a sensing device 410 integrated with or removably attached to the system components 102 is designed to monitor the operating parameters of the system components 102. Multiple sensing devices 410 can be installed based on the size, specifications, and complexity of the connected system 100 to collect accurate information. The sensing device 410 can comprise one or more of a power sensor, a temperature sensor, a pressure sensor, a gyro, an accelerometer, a vibration sensor, a flow sensor, a current sensor, a voltage sensor, a power sensor, a frequency sensor, an energy sensor, a fault sensor, an audio sensor, an optic sensor, or a combination thereof. Moreover, the sensing device 410 can be connected to and designed to collect data from one of the system components 102, or in some examples, the sensing device 410 can collect data from more than one of the system components 102. In this non-limiting example, the sensing device 410 can further include different types of sensing components to collect and extract information related to operating parameters and send the data set to the central controller 104 or another system component 102 via a wireless or wired connection. In some embodiments, the sensing device 410 can be at a different geographic location than the central controller 104.

Each of the system components 102 can collect, send, and receive data sets to and from the other system components 102 or via the central controller 104. The data sets collected and sent from the system components 102 can include, at least, specific component information from the manufacturer for the system component 102 and operating parameters. As described above, this can include information entered either directly or indirectly from the user, but can also include information from the manufacturer, such as routine maintenance schedules, system updates, or baseline settings. The data sets collected and sent via the system components 102 can further include operating parameters collected from the sensing device(s) 410 associated with and connected to each of the system components 102.

The system components 102 shown in FIG. 3 can include an integrated sensing device 410 or an external sensing device 410 (see FIG. 4) for collecting and/or extracting data sets associated with the identification element 114 and operating parameters for the system component 102. Non-limiting examples of the system components 102 and the extracted data are described herein, but additional system components 102 and operating parameters will be recognized by those skilled in the art.

As a non-limiting example, the pool pump 302 and booster pump 304 can include one or more sensing devices 410 designed to detect power, vibration, current, flow, pressure, temperature, frequency, or a combination thereof. The power sensor can measure when the pool pump 302 and booster pump 304 are connected to power, and whether the pump(s) are activated. Additionally, some pool pumps 302 and booster pumps 304 have a soft start mode or similar controlled or reduced power mode, which can be measured and detected by the power sensor. The vibration sensor can measure vibration levels to identify electromagnetic or mechanical imbalance, loose components, rubbing parts, part failure, cavitation, or resonance. Some embodiments can further include an accelerometer to detect if the device becomes unlevel. The current sensor can measure the current flowing through the pump(s) using a non-intrusive method. The flow sensor can measure the flow of water that is pumped by the motor of the pool pump 302 and the booster pump 304 and determines the actual health of the motor by determining if the flow rate is unexpectedly high or low based on the particular application and various threshold metrics. The flow sensor can also include a flow switch or a fluid velocity sensor to detect abnormal flow rates. The pressure sensor can monitor the pressure in air compressors, heat exchangers, and similar that all use pumps to push air or water through their respective systems. The pressure sensor can further measure an input and differential pressure at the head of the pool pump 302 or the booster pump 304. The sensing device 410 can be designed to overcome the faults and monitor the pool pump 302 and booster pump 304. Further, the temperature sensor monitors the temperature and helps to detect any abnormal temperature rise due to any malfunction or failure, this can include but is not limited to temperature measurements at the inlet, outlet, and motor. The frequency sensor can measure the frequency of the pool pump 302 and the booster pump 304 and can be used for controlling VFDs that can be associated with or connected to either the pool pump 302 or the booster pump 304. In some embodiments, an encoder can be used to measure and monitor the velocity of a rotor/impeller of the pool pump 302 and the booster pump 304. Other sensing devices 410, such as the voltage sensor, can monitor the input voltage and calculate the power factor of a motor of the pool pump 302 and the booster pump 304 using both current and voltage values of the connected system 100 or the values detected by the sensing devices 410 connected to each of the pool pump 302 and the booster pump 304.

In another non-limiting example, the filter 306 can include a sensing device 410 designed to detect: pressure, flow, fluid velocity, or a combination thereof. The pressure sensor can detect and monitor differential pressure to identify when the filter 306 can be dirty or clogged with debris. Routine maintenance alerts can be provided to regularly clean the filter 306 and extend the life of the filter 306. The flow sensor can include a flow switch or a fluid velocity sensor to measure the flow status and flow rate at the inlet, outlet, and backwash ports of the filter 306. Additionally, the flow sensor can measure the flow rate to help detect potential leaks in the filter 306 and a filter compartment (not shown).

In another non-limiting example, the solar controller 308 can include a sensing device 410 designed to detect: power, voltage, current, temperature, or a combination thereof. The power sensor can determine when the solar controller 308 is connected to power, and whether it is activated. The voltage sensor can monitor the input voltage and detect any upstream electrical system faults. The voltage sensor can also measure the control voltage and verify the output signal to a solar valve actuator is within range (e.g., -0-24V), and can verify the solar controller 308 relay voltage is within range (e.g., ~0-230VAC). The temperature sensor can be used to monitor an internal temperature of the solar controller 308 and identify if any internal components, including electronic components, are overheating.

In another non-limiting example, the solar panels 310 can include a sensing device 410 designed to detect: power, voltage, current, solar radiation, or a combination thereof. The power sensor can measure when the solar panels 310 are activated. The voltage and current sensors can be used to detect power generation and the power output of the solar panels 310. In addition to the data analytics techniques described herein, the data collected by the sensing device(s) 410 can be used to produce energy reports and historical usage data displayed on the user device 106. The data can also be used by the other system components 102 to evaluate performance and propose updates. A photosensor can be used to detect levels of solar radiation (i.e., is it a sunny day or a cloudy day?).

In another non-limiting example, the heater 312 can include a sensing device 410 designed to detect: power, voltage, current, temperature, pressure, or a combination thereof. The power sensor can measure when the heater 312 is connected to power, and whether it is activated. The voltage sensor can monitor the input voltage and detect any upstream electrical system faults. The voltage sensor can also measure voltage drop to determine the power consumption of the heater 312. The current sensor can detect potential shorts in the heater 312 by identifying abnormal power consumption or current spikes. The temperature sensor can be used to monitor the internal temperature of the heater 312 including the heating elements (not shown). The temperature sensor can also measure the temperature at an inlet and an outlet to verify the water temperature is being heated according to the heater 312 controls and settings. The pressure sensor can measure differential pressure to identify scale or fouling through a water passage in the heater 312.

In another non-limiting example, the sanitizer 314 can include a sensing device 410 designed to detect: power, radiant energy, resistance, voltage, current, pressure, or a combination thereof. The power sensor can measure when the sanitizer 314 is connected to power, and whether it is activated. In some embodiments, the sanitizer 314 is an Ultraviolet ("UV") Light sanitizing device and a photosensor can be used to measure the radiant energy of the sanitizer 314 to also determine if the sanitizer 314 is activated. The resistance sensor can determine the electrical resistance across the UV bulb to verify the bulb is properly installed and within a functional range. Irregular resistance measurements can indicate a replacement bulb should be installed for the sanitizer 314. The voltage sensor can monitor an input voltage and detect any upstream electrical system faults. The voltage sensor can also measure voltage drop to determine the power consumption of the sanitizer 314. The current sensor can measure the current in the sanitizer 314 system to verify the circuit is working properly. Low or non-existent current measurements can indicate a replacement bulb should be installed for the sanitizer 314. The pressure sensor measures differential pressure to detect scale or fouling through a water passage in the sanitizer 314.

In another non-limiting example, the water quality monitor 316 can include a sensing device 410 designed to detect: power, voltage, flow, resistance, water chemistry, or a combination thereof. The power sensor can measure when the water quality monitor 316 is connected to power, and whether it is activated. The voltage sensor can monitor the input voltage and detect any upstream electrical system faults. The voltage sensor can also measure a battery level if the water quality monitor 316 is battery-powered or includes a battery pack. The flow sensor can also include a flow switch and can monitor water flow at an input and an output of the water quality monitor 316 and can identify potential clogs in the monitoring system. The flow sensor can further determine if the flow velocity is sufficient for proper operating conditions for the water quality monitor 316.

In another non-limiting example, the pH regulator 318 can include a sensing device 410 designed to detect: power, voltage, current, level, chemistry, flow, or a combination thereof. The power sensor can measure when the pH regulator 318 is connected to power, and whether it is activated. The voltage sensor can monitor the input voltage and detect any upstream electrical system faults. The current sensor can measure the current in the pH regulator 318 system to verify the circuit is working properly. Abnormal current measurements or an abnormal power consumption reading can indicate a malfunction. A chemical tank level associated with the pH regulator 318 can be measured by a level sensor, such as but not limited to a float switch, force sensor, or similar. The chemical sensor can be used to identify chemical properties within the chemical tank. In some embodiments, one or more electrodes, or similar, can be used to measure a difference in the electrical potential between a pH electrode and a reference electrode. The flow sensor can include a flow switch or a fluid velocity sensor to measure the rate at which chemicals are dispensed through the pH regulator 318 system. In some embodiments, the flow sensor can also be integrated with, or otherwise communicate with, the chemical sensor to measure the type and quantity of chemical(s) dispensed. In some embodiments, an encoder can be used to measure, monitor, or detect the rotational position and velocity of a dispensing component of the pH regulator 318.

In another non-limiting example, the water feature 320 can include a sensing device 410 designed to detect: power, flow, pressure, or a combination thereof. The power sensor can measure when the water feature 320 is connected to power, and whether it is activated. The flow sensor can include a flow switch or fluid velocity sensor, or similar, to measure the flow rate through the water feature 320. The pressure sensor can be used to detect a water depth at a bottom surface of the water feature 320. The pressure sensor can also communicate with the flow sensor to measure the flow rate through the water feature 320.

In another non-limiting example, the pool cleaner 322 can include a sensing device 410 designed to detect: power, voltage, pressure, or a combination thereof. The sensing device 410 can also determine if debris should be emptied from the cleaner. The power sensor can measure when the pool cleaner 322 is connected to power, and whether it is activated. The voltage sensor can monitor the input voltage and detect any upstream electrical system faults. The pressure sensor can measure a suction level in a suction line of the pool cleaner 322. An encoder can be used to detect whether one or more spinning motors of the pool cleaner 322 are rotating properly. As with the other system components 102 described herein, the monitored measurements can vary depending on the manufacturer and type of pool cleaner 322.

In another non-limiting example, the pool skimmer 324 can include a sensing device 410 designed to detect pressure. A differential pressure sensor can detect if there is a clog in a skimmer basket of the pool skimmer 324 or if debris is interfering with air being induced in an equalizer line of the pool skimmer 324. In some embodiments, an encoder can be used to detect a position of a weir installed in the pool skimmer 324.

In another non-limiting example, the pool drain 326 can include a sensing device 410 designed to detect: temperature, flow, pressure, or a combination thereof. The temperature sensor can measure the temperature of the water output flowing through the pool drain 326. The flow sensor can include a flow switch, a fluid velocity sensor, or similar, to measure the flow rate of water through the pool drain 326. The pressure sensor can measure a pool water level. The pressure sensor can also measure a differential pressure to detect if the pool drain 326 may be clogged.

In another non-limiting example, the pool light 328 can include a sensing device 410 designed to detect one or more of power, voltage, current, resistance, or a combination thereof. The power sensor can measure when the pool light 328 is connected to power, and whether it is activated. The voltage sensor can measure the input voltage to the pool light 328 and detect any upstream electrical system faults. The current sensor can measure the current through the pool light 328 and can be used with the voltage sensor to measure power consumption. The voltage sensor or the current sensor can also detect when there is an abnormal power consumption measurement, which can indicate a malfunction with the pool light 328. In some embodiments, the pool light 328 can include multiple pool lights and can also include advanced lighting controls such as animation, color, dimming, timer controls, etc. The advanced lighting control features for the pool light 328 can include a sensing device 410 to detect and measure system variables or other operating parameters associated with the one or more lighting control features. In some embodiments, the resistance can also be measured to identify electrical shorts, faults, or when a light bulb or diode should be replaced.

In another non-limiting example, the valve(s) 232 can include a sensing device 410 designed to detect: voltage, current, position, flow, or a combination thereof. The voltage sensor can monitor the input voltage and detect any upstream electrical system faults. The voltage sensor can also measure the control voltage and verify the output signal to a valve actuator is within range (e.g., ~0-24V). The current sensor can measure the current in the valve system and detect if there is an abnormal current measurement. Abnormal current measurements or an abnormal power consumption reading can indicate a malfunction in the valve(s) 232. The position of a valve actuator or shaft can be detected using a position sensor, encoder, or similar. The flow switch can measure the flow rate through the valve(s) 232 and detect if a valve port is not receiving an expected flow.

In another non-limiting example, the other equipment 330 can include a sensing device 410 designed to detect operating parameters associated with components of the other equipment 330 (e.g., power status, operational mode, flow, pressure, chemical composition, calibration status, and other parameters).

In one embodiment, the sensing device 410 (e.g., any of the sensing components, sensors, or other monitoring devices discussed above) can send data sets associated with the operating parameters and historical data of the system components 102 continuously, or substantially continuously, at scheduled intervals, or in response to a request or other system event. In this example, the request or system event can include user input received by the user's device. For example, if a user wanted to check the temperature of the pool or spa, the user device 106 could receive this request and transmit a command to a sensor in communication with the pool or spa water, to collect the current temperature reading and transmit the information back to the user device 106 and process the data sets to generate a display to be displayed on the user device 106.

FIG. 4 illustrates a system view of one embodiment of the central controller 104 in communication with one of the system components 102, to illustrate an example of a connected system 100 for a system component 102. As described in connection with FIG. 3, the system component 102 can include an integrated sensing device 410 or otherwise be connected to an external sensing device 410. The central controller 104 can also, in certain embodiments, send and receive information regarding the system components 102 to the other system components 102 via the network 108, wireless communication modules 112, or other communication processes. The central controller 104 can also include a processor 402, a memory unit 404, a power supply 406, and a gateway node 408.

The memory unit 404 can be designed to store user record information or information received from the system components 102 or sensing devices 410. The memory unit 404 can be implemented as a stand-alone memory unit or as part of the processor 402.

Furthermore, as one non-limiting alternative to the configuration seen in FIG. 4, the network 108 can include a programmable processor 402 or a network 108 interface and can be electronically coupled to a memory or database device. In some embodiments, the network 108 can include program instructions that are stored on a cloud server non-transitory computer-readable medium and are executable by the programmable processor 402 to perform one or more of the processes described herein.

In a non-limiting example, the programmable processor 402 can include one or more lookup modules provided in the form of hardware, firmware, software, or a combination thereof. The lookup module(s) can include a controller for executing program instructions. The lookup modules can include, in a non-limiting example, a status lookup module, a parameter lookup module, an update lookup module, and an output lookup module. In some aspects, the configuration store 116 can be provided in the form of one or more of the lookup modules described herein.

For instance, the lookup modules can be executed by the processor 402 and/or the central controller 104. The status lookup module can be designed to determine the status of a system component 102 and determine when an operating parameter has changed. The status of a system component 102 can include: installed, powered on, powered off, connected, disconnected, offline, online, error, or any combination thereof or similar status. The status determined by the status lookup module can be passed to the parameter lookup module, the update lookup module, and the output lookup module. The parameter lookup module, the update lookup module, and the output lookup module can use the received status to access stored operating parameters.

Stored operating parameters can be stored on a non-transitory computer-readable medium, such as the memory unit 404 which is functionally a part of the central controller 104, the database 504, or other processing systems. Stored operating parameters can be in the form of one or more lookup tables or one or more databases 504 that use the determined status to determine whether to automatically configure a system component 102 and the associated connected system components 102 when a new system component 102 is added and/or removed. Stored operating parameters can include, but are not limited to, user settings, manufacturer-recommended settings, schedule settings, past usage data, local trend data, etc. to update one or more of the system components 102 of the connected system 100 when a new system component 102 is added to the system, when a device is removed, or when the status lookup module otherwise indicates that the status of one or more components has changed. In some embodiments, the local trend data may include pool size and/or volume, installation standards, builders, manufacturers, configurations, usage, weather trends, etc. related to the geographic location of the installed connected system 100. In some embodiments, the local trend data can be evaluated based on a user's zip code or the location sensed from one or more user devices 106.

The update lookup module can be designed to communicate with the advanced analytics module 516 or other processing modules to determine if updated operating parameters are recommended as a result of connected system analytics and/or the output of the iteratively trained learning module. In another embodiment, the update lookup module can also include manufacturer-recommended updates or updates based on other external systems. For example, if the central controller 104 is designed to receive weather prediction information via the network 108, the update lookup module can receive and process this information, and push a recommended update to the connected system 100 to modify the pool heater 312 settings, to accommodate the weather forecast while maintaining the user's pool temperature preferences, while minimizing the output and energy usage of the pool heater 312 or other system components 102.

The output lookup module can be designed to store the real-time operating parameters detected by the one or more sensing devices 410 associated with each system component 102. In one embodiment, this collected usage data can be stored in the database 504 and retrieved by the output lookup module to generate one or more input data sets for the iteratively trained learning module. In some examples, the output lookup module can be used as a feedback loop, or in connection with a feedback module for the iteratively trained learning module to help improve the overall performance of the connected system 100 and improve the accuracy of the advanced analytics module 516 and/or the iteratively trained learning module.

FIG. 5 is a block diagram of a control system 500 of the connected system 100. The control system 500 can include a server 502, one or more databases 504, one or more programmable processors and memory units (not shown), and one or more network 108 interfaces. In some embodiments, the one or more programmable processors and memory units can be integrated into one or more of the other control system components including but not limited to, the server 502 and/or network 108 interface. The network 108 interface can include any of the network configurations described in connection with the network 108 in FIG. 2.

While the system components 102 described include a 502 and a network 108 interface, it will be recognized by one skilled in the art that the control system 500 configuration could include computing devices in various configurations. The computing elements of the control system 500 can be provided via one or more computing devices that can be arranged, for example, in one or more server banks, computer banks, or other arrangements. Such computing devices can be located in a single installation or can be distributed among many different geographical locations. For example, the control system 500 can include computing devices that together can include a hosted computing resource, a grid computing resource, and/or any other distributed computing arrangement. The computing devices can further include one or more routers. In some cases, the control system 500 can correspond to a dynamic computing resource where the allotted capacity of processing, network 108, storage, or other computing-related resources can vary over time.

In one non-limiting embodiment, the control system 500 is designed to process data sets using data processing modules within the server 502. The data processing modules can include a diagnostic module 508, a deployment module 510, a notification module 512, a training module 514, and an advanced analytics module 516. In some embodiments, the control system 500 can include additional modules for processing and analyzing different data elements and data sets and are not limited to the data processing modules shown in FIG. 5. The control system 500 can include any suitable number of processing modules (including a single processing module) for executing or carrying out any of the processes discussed herein.

In some embodiments, the connected system 100 can collect and store data sets in the database 504, where the data sets can then be processed by the data processing modules to provide proposed corrective action to improve or maintain the performance of the connected system 100 using, in one example, advanced analytics and an iteratively trained learning module. In some embodiments, the data sets can include system component data 518, user data 520, third-party data 522, system data 524, and other data 526.

In at least one embodiment, the control system 500 receives transmitted data including system component data 518, which can include but is not limited to manufacturer and manufacturer-provided information, model number, serial number, an identification element 114, a QR code, an RFID tag, size and/or capacity, volume, a parts list, warranty or protection information, installation information, configuration settings or other configuration information, a geographic location, a date installed, recommended maintenance procedures and timelines, normal operating threshold(s), and error/warning codes. In some embodiments the control system 500 can obtain additional system component data 518 from the manufacturer of the system component 102 including maintenance procedures, maintenance timelines and/or tasks, rebates, recalls, common issues, or other data 526. The system component data 518 can further include the operating data obtained from the sensing device(s) 410 described for the individual system components 102 in the description for FIGS. 1-3, although the system component 102 data is not limited to these examples. Additional system component data 518 can be collected, including, for example, service repairs, a maintenance history, usage data, and schedules for the specific system component 102.

In some embodiments, the control system 500 receives transmitted data including user data 520, which can include but is not limited to personal information about the user, contact information, address, a list or log of the user's specific system components 102, maintenance history information, secondary contact information, payment information, promotional codes, any notes regarding previous service requests (e.g., gate access code, preferred service days/time, previous service technician notes, etc.), and other information. In one embodiment, the user data 520 can be updated to include notification settings, communication preferences, system component settings, historical usage data, programmed settings, schedule settings, or service information for a specific user, including call logs, diagnostic records, and service history. In some embodiments, the control system 500 can obtain additional information uploaded to the connected system 100 via the network 108, where the additional information can include, but is not limited to, photos and descriptions uploaded to the control system 500 to aid in diagnostics, service, repair, or replacement. A third-party system 110 and/or the diagnostic module 508 of the server 502 can obtain access to the user-uploaded information stored in the control system 500 to help facilitate service. In this example, additional authentication processes can be used before providing access to the third-party system 110. In some embodiments, a third-party system 110 can transmit and/or upload information to the control system 500 to be associated with the user's specific system components 102, for example, photos after a service request is completed and/or notes from a technician or a third-party regarding parts and/or a post-service summary report and/or other aspects of the service request. In some embodiments, the post-service summary report can be generated automatically by one or more processes described with the control system 500.

In some embodiments, the control system 500 receives transmitted data including third-party data 522, where the third party can be a dealer, which can include but is not limited to information about the third party, brands serviced, repair and service capabilities, profile information including descriptions regarding service and request handling techniques and priorities, invoicing and payment information, contact information, address, geographical regions located and/or serviced, a list or log of the third-party's specific system components 102 issues completed, maintenance history information, maintenance procedures and timelines, manufacturer information, part supply, number of available technicians, certifications, scores, and other information. In one embodiment, the third-party data 522 can be updated to include notification and communication preferences and settings and historical usage data for a specific user, servicer, or technician, including call logs, denied service requests, and service history.

In one embodiment, a third party can install an application on a device or otherwise integrate a third-party system 110 with the control system 500. A third party can set up a record (i.e., dealer record) when the third party is an authorized servicer or dealer related to one or more of the system components 102. In some embodiments, the third-party data 522 can be updated in the control system 500 as the third party updates the information in the third-party record. A user can also authorize one or more third parties to obtain access to some aspects of the user's record information stored in the control system 500.

In some embodiments, the control system 500 receives transmitted data including system data 524, which can include but is not limited to the status, health, and connection of the various aspects of the connected system 100, including the connectivity information between each of the devices and network 108 interface(s). The system data 524 can further include troubleshooting or general questions regarding the user or third-party interface, separate from the diagnostic aspects related to the system components 102. The system data 524 can further include information related to the status lookup module described in connection with FIG. 4.

In some embodiments, the control system 500 receives transmitted data including other data 526, which can include data sets not described in connection with the other transmitted data categories described. This includes but is not limited to, historical information, usage reports, engagement information, parts supply, or any other data 526 that can be used by the control system 500 or other aspects of the connected system 100.

The control system 500 can utilize the processes illustrated in FIGS. 6-9 and described below to transform the data sets into customized outputs and proposed corrective action, in part, using advanced analytics, diagnostic tools, and an iteratively trained learning module.

The diagnostic module 508 can be designed to receive and/or retrieve data sets from the sensing and monitoring devices of the connected system 100. The diagnostic module 508 can also be designed to compare the data sets to pre-defined threshold values. In some embodiments, the data sets compared by the diagnostic module 508 include the system component data 518 and user data 520 but can include any combination of information from one or more databases 504. For example, the diagnostic module 508 can process sensor information indicating that a booster pump 304 is detecting abnormal pressure readings compared to the normal threshold values. In this example, the diagnostic module 508 can then compare other system component data 518 and determine that the filter 306 is processing an abnormally high amount of debris, impacting the pressure in the overall connected system 100 and an extended ramp-up time for the booster pump 304. The diagnostic module 508 can also include options to remotely troubleshoot system components, assist the user in self-diagnostics and/or self-repair, order replacement parts, and/or deploy a request to a third party utilizing the deployment module 510.

The control system 500 can further include a deployment module 510. In some embodiments, the deployment module 510 can be designed for efficiently distributing requests to one or more third parties. In another embodiment, the deployment module 510 can also be designed for pushing or installing updates to the system components 102 and/or other aspects of the connected system 100. In one embodiment, the deployment module 510 comprises one or more location monitoring components and parameter validators to compare diagnostic information generated by the control system 500 and the diagnostic module 508, with the third-party data 522.

The notification module 512 can be designed for generating, creating, modifying, and/or logging events, system updates, schedule updates, etc. for the control system 500 and the connected system 100. The notification module 512 can also generate, update, and push notifications and customized alerts to one or more devices or applications for the user and/or the third party. In one embodiment, the notification module 512 is designed to be dynamic, scalable, and integrated with third-party systems 110 or other user devices 106 or the user's other connected systems 100 (e.g., home automation, mobile applications, landscape systems, security systems, etc.). In some embodiments, the notification module 512 is designed to receive data sets from the data sources or applications and handle the notification generation and handling for the data sources and/or applications.

The training module 514 can be designed to perform various data analysis and modeling processes. In one example, the training module 514 generates and iteratively trains learning modules for providing dynamic outputs. For example, in some embodiments the training module 514 can be designed to perform one or more of the various data processing, comparing, determining, and configuring steps of the processes shown and described in connection with FIGS. 6-9. The training module 514 can be designed to generate, train, and execute nodes, neural networks, gradient boosting algorithms, mutual information classifiers, random forest classifications, and other machine learning and artificial intelligence-related algorithms.

The advanced analytics module 516 can be designed to perform additional data processing techniques and steps, including but not limited to report generation, troubleshooting help, customized user display content and/or recommendations, historical data, usage data, geographic trends based on zip code or other regional factors, weather pattern analysis, analytics based on received or retrieved third-party data 522, and other analytics. The advanced analytics module 516 can also be used for relationship handling processes including automated reminders, call scheduling, pushing system updates to the connected system 100 or components, processing feedback, and other data 526 processing and/or data analytics tasks.

FIG. 6 illustrates an identification process 600 for identifying a system component 102 (e.g., "device") to be added or connected to the connected system 100. At step 610, the connected system 100 can be turned on, or detected as already being powered on by a sensing device 410. In some embodiments, step 610 may be triggered by the system component 102 being started up, restarted, powered on, connected, etc. At step 620, the sensing device 410 and/or central controller 104 can detect whether the system component 102 is not already configured or not otherwise connected to the connected system 100. In some embodiments, the system may detect a system component 102 in step 620 after the system component 102 has been disconnected, disabled, powered down, or in error status for some period of time. In some embodiments, the new device detection of step 620 may be triggered after a pre-defined amount of time an existing system component 102 is disconnected from the connected system 100. In some embodiments, one or more system components 102 can detect a new device. In some aspects, the system 100 can use one or more digital image processing techniques to detect a new device.

In some forms, the system 100 may generate and send a request associated with a specific type of component (e.g., sending a message asking for a pump

At step 630, the identification element 114, described in connection with FIGS. 1-3, of the system component 102, can be scanned, recognized, entered, or otherwise entered by the system. In some embodiments, the identification step 630 can be performed by another system component 102 of the connected system 100. For example, if a connected pool and spa system is introduced to a new system component 102 like a user is installing a new water feature 320, the pool light 328 system, or one of the pool lights 328 could detect and identify the water feature 320 component being added to the system.

In some aspects, the system can detect and/or identify the system component 102 or the identification element 114 associated with the system component 102 using one or more digital image processing techniques. For example, the system may use object detection, object recognition, image filtering, image enhancement, feature extraction, digital masking, or other types of image analysis to detect and identify the system component 102 and/or the identification element 114 associated with the system component 102.

In step 640, the data set, including but not limited to the system component data 518, user data 520, third-party data 522, system data 524, and other data 526, described in connection FIG. 5, can be extracted from the system component 102. In some forms, the data set may include one or more images or portions of image data associated with one or more aspects of the connected system, including the system component(s) 102. In some embodiments, the data set may be stored separately from the local system component memory. In some embodiments, the connected system 100 can include an elastic cache, cloud storage, or other dynamic memory devices or systems to store and communicate data and data sets associated with the system components 102 connected to the system and new or reintroduced system components 102 during configuration and monitoring. At step 650, the data set can be stored in a system database 504 as described in connection with FIG. 5, or a lookup table as described in connection with FIG. 4, or other data storage device, component, system, or similar. At step 660, the data set can be processed by one or more of the processing modules on the 502 (see FIG. 5). In some embodiments the data set may be processed by a processor and/or controller in the connected system 100. In some embodiments, the data set may be transmitted to an external processor or processing system for processing. In some embodiments, the processing step of step 660 can include detecting or sensing operating parameters of the system component 102. Operating parameters can include, but are not limited to, the operating data measured and described in connection with FIG. 3 and can be included in a data set. At step 660, the sensing device 410 and/or the central controller 104 can determine that a system component 102 is malfunctioning or has generated an error, warning, maintenance reminder, or similar. If an error code is detected, at step 660 the data sets can be transmitted to the control system 500 for additional analysis and processing.

In some embodiments, the data sets measured by the sensing device 410 can be automatically and continuously (or substantially continuously) transmitted to the control system 500 and the processing step of 660 can be performed by the control system 500 and the associated processing module(s).

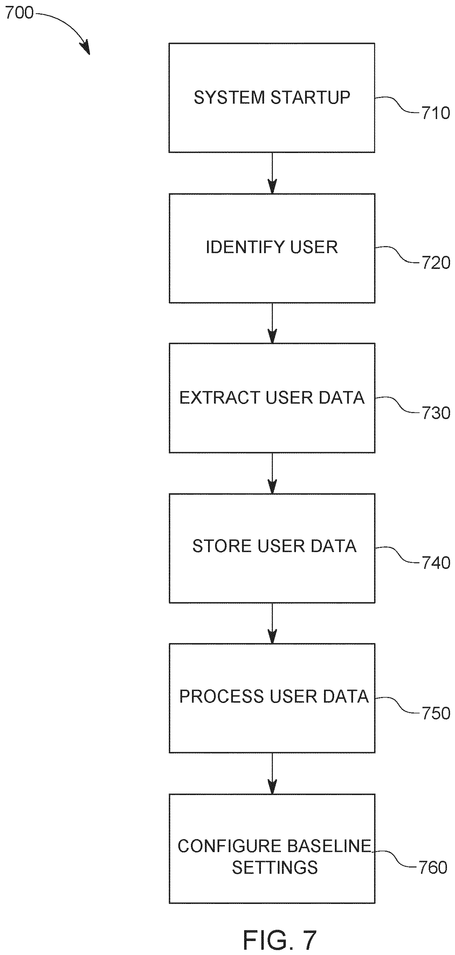

FIG. 7 illustrates a configuration process 700 for determining and configuring baseline settings for the system component 102. In one embodiment, the configuration process 700 may utilize the training module 514 described in connection with FIG. 5 to determine the baseline settings using an iteratively trained learning module. At step 710, the connected system 100 can be turned on, or detected as already being powered on by a sensing device 410. In some embodiments, step 710 may be triggered by the system component 102 being started up, restarted, powered on, connected, etc. At step 710, the sensing device 410 and/or central controller 104 can detect whether the system component 102 is not already configured or not otherwise connected to the connected system 100, as described in connection with FIG. 6.

At step 720 the system can identify a user associated with the connected system 100. In one embodiment, the user can be identified by the system component 102 being added, as identified in the identification 600 process described in connection with FIG. 6, and/or with the user data 520 associated with the connected system 100 as indicated by information in the database 504, lookup table, or other memory unit or data storage solution. In some embodiments, the connected system 100 may identify a specific user based on the location of the startup request and process the associated known connected systems in proximity to the request.

In step 730 the user data 520 associated with the identified user can be extracted. In some embodiments, this may include the user's schedule and notification preferences, or other operating parameter settings or preferences associated with the user. In one non-limiting example, the user data 520 may include information relating to the user's tendency to turn on the spa heater on Friday around noon. The user data 520 extracted at startup can include the system component data 518 associated with the user indicating that the spa heater is activated and set to a particular temperature with consistent frequency. The system can be designed to determine, using an iteratively trained learning module, in one example, that a user only heats his pool and uses the colored lighting system on holiday weekends, and the lights are set in a theme consistent with the specific holiday or season (e.g., green for St. Patrick's Day, red, white, and blue for Memorial Day Weekend, rainbow for June, etc.).

At step 740 the extracted user data 520 can be stored in the database(s) 504 or the lookup table, or similar memory unit or data storage component of the connected system 100, or otherwise in communication with the connected system 100.

The system can then process the user data 520 in step 750. In some embodiments, the user data 520 can be processed by one or more of the processing modules on the 502 (see FIG. 5). In some embodiments the user data 520 may be processed by a processor and/or controller in the connected system 100. In some embodiments, the user data 520 may be transmitted to an external processor or processing system for processing. In some embodiments, the processing step of step 750 can include detecting or sensing a location for the user, for example, a user's zip code. In one non-limiting example, the processing step 750 can include processing a user's zip code to determine an average pool size, weather trends, usage data, and energy standards or utility incentive programs associated with a given zip code or surrounding areas. In this example, the processing step can include processing the user data 520 with an iteratively trained learning module to provide customized configuration settings and baseline operating parameters, or baseline settings for a system component 102. In another embodiment, the processing step 750 can include multiple data sets or data elements being processed as part of one or more iteratively trained learning modules to provide recommended configuration settings or baseline settings for a system component 102. For example, the system can use manufacturer-recommended settings, adjusted based on the user data 520, like geographic location and/or pool size, to provide a recommended baseline setting for a pool pump 302 or other system component 102.

In step 760 the system, via the central controller 104 or another aspect of the connected system 100, can configure the baseline settings of one or more system components 102. In some embodiments, the baseline settings may be configured using the deployment module 510, described in connection with FIG. 5. In some embodiments, the processed data set from steps 660 and 750 can be added to a modified, updated, or added to other data sets and stored by the control system 500 in a database 504 and/or lookup table, or similar.

In some embodiments, the iteratively trained learning module can analyze other parameters, like energy-saving incentives by local utilities, based on third-party data 522 received and stored by the system, and provide recommendations to update the spa heating schedule to begin earlier in the day, before peak hours begin, in one non-limiting example.

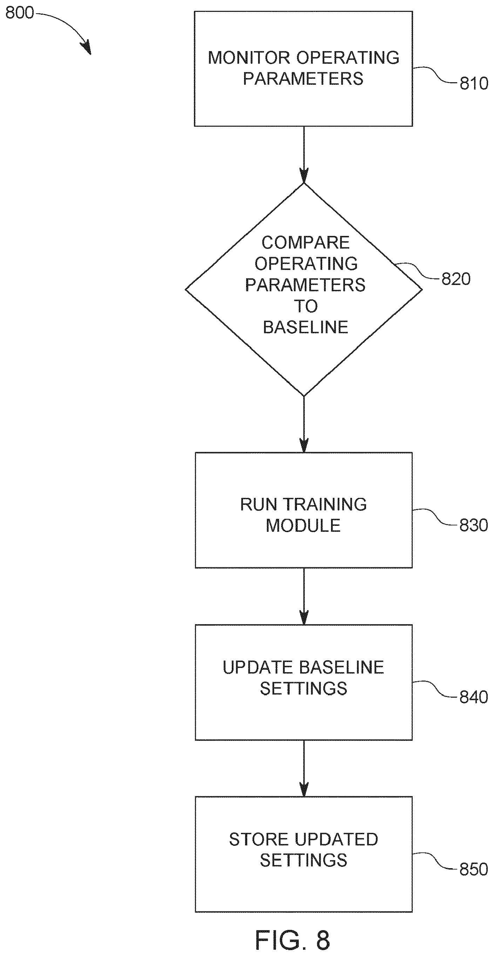

FIG. 8 illustrates a process 800 for updating the baseline settings of a system component 102. In one embodiment. The data sets can include operating parameters, including but not limited to the user data 520 and/or operating data described in connection with the system component data 518, as discussed above in connection with FIG. 5. At step 810, the operating parameters of one or more system components 102 can be measured and/or monitored by one or more sensing devices 410. In some embodiments, the operating parameters can be monitored and stored for each component. In some embodiments, operating parameters of the overall connected system 100, either as measured data sets or as calculated analytics produced as a result of the processing module(s) and/or iteratively trained learning module can be monitored as well. In some embodiments, the monitoring step 610 may be continuous, intermittent, at scheduled or pre-defined intervals, or can occur when a change in the operating parameter is detected or sensed, or a combination thereof.

In some embodiments, the monitored operating parameters are saved in a database 504 or lookup table or similar to the control system 500. The control system 500, in step 820 can determine if the operating parameter values have changed by comparing the baseline settings transmitted, sensed, or stored, for this specific system component 102 to the newly measured operating parameters. In an alternative embodiment, the central controller 104 can internally store the operating parameter values and can determine if the operating parameter values have changed before transmitting the values to the control system 500 to run the training module 514 at step 830. In an alternative embodiment, the system component 102 can locally store the measured operating parameter values.

In some embodiments, the monitoring can include comparing the measured operating parameters to threshold values for the normal operating range. In some embodiments, this comparing step may be designed as part of the comparing step 820. At step 820, the system, or a system component 102, can compare the measured operating parameters to the baseline settings, to determine if there is a difference in the values. As discussed in connection with FIGS. 6 and 7, the baseline settings can be set by the control system 500 based on one or more manufacturer recommendations, user data 520, or other system component data 518. In some embodiments, the baseline settings can be manually overridden by a user. In some embodiments, the baseline settings can be altered only with authorized access to the control system 500 or other aspects of the connected system 100.

In one embodiment, tolerance windows can be selected to allow for some fluctuation in the operating parameter values that would not qualify as a change in the operating parameter value. In some embodiments, this may include tolerance windows for the comparing step of 820 when an operating parameter is within a certain tolerance window compared to the baseline setting. Thus, in some examples, the operating parameter values are not considered to have changed if the amount of change is within a tolerance window. In some embodiments, the tolerance window can be set by a user, a manufacturer, or a third party. If the operating parameter values have not changed, the sensing device 410 can continue to monitor the operating parameters associated with the system components 102. In step 830, the operating parameter(s) can be used as an input to the iteratively trained learning module to analyze the performance of the system component 102, the other system components 102, and the overall connected system 100, based on the monitored operating parameters and initial baseline setting configuration. In some embodiments, if the operating parameter values do not exceed the threshold value in the comparing step 820, the system can continue monitoring at step 810 until an operating parameter value does exceed the threshold value.

In another embodiment, the system can execute the iteratively trained learning module at step 830 on a continuous, or pre-defined interval, regardless of the outcome of the comparing step 820.

In some embodiments, the comparing step 820 can be designed to communicate or utilize the diagnostic module 508 to determine whether a system component 102 has an error or malfunction. In this example, the output of the iteratively trained learning module at step 830 can include a proposed corrective action of turning off, disabling, restarting, replacing, repairing, servicing, or similar, the malfunctioning system component.

In step 830, the system or a system component 102 in some embodiments can execute an iteratively trained learning module to generate proposed corrective action and/or updated baseline settings. In some embodiments, the system may be designed to train the training module 514 at step 830 before running the iteratively trained learning module. In some embodiments, the training process can be designed to perform various advanced data analysis and modeling processes. In one example, the training process can be designed to generate and iteratively train one or more learning modules for providing customized recommendations for corrective action and/or updated baseline settings for one or more system components 102 to improve the overall performance of the connected system 100. In some embodiments, the training process can be designed to generate and iteratively train one or more learning modules to provide a dynamic diagnostic, notification, deployment, and service request matching recommendation for third-party dealers who can provide service specific to a user's system component 102 according to the output of the diagnostic module 508. For example, the training process can be designed to generate, train, and execute nodes, neural networks, gradient boosting algorithms, mutual information classifiers, random forest classifications, and other machine learning and artificial intelligence-related algorithms.

In some embodiments, at step 830, the connected system 100, or a system component 102, receives (or retrieves from one or more databases 504 or lookup tables or similar) a data set(s) including measured operating parameters that can be used to iteratively train one or more raw training modules to create trained learning modules. In some embodiments, the system can input a data set (e.g., extracted from the system component 102, stored in the database 504 or lookup table, or similar) as a training data set, or training data sets. The training data sets can be input into a raw training module based on the type of data or the data type associated with the data set(s). In one non-limiting example, this allows the system to iteratively train the learning module(s) based on input training data sets of different data types and to provide corrective update recommendations based on the specific data type, on the user data 520, on the system component 102, on local trends or weather patterns, or based on any number of other factors or characteristics.

The training process can also include comparing the output of the raw training module to a known value(s), including baseline settings in some embodiments, for the input training data set. One or more nodal emphasis values of the system can be updated for nodes within the raw training module(s) based on the results of the comparing step 820, to iteratively train and improve the training module 514. In one embodiment, when the output of the raw training module(s) is within a preconfigured threshold of the known value(s) for the input training data sets, as determined during the comparing step 820, the raw training module(s) can be saved as the iteratively trained learning modules.

The system can also be designed to receive and process an input data set associated with a specific system component 102. In one embodiment, a specific system component 102 can have multiple associated input data sets. In one embodiment, the system can input each of the input data sets through an iteratively trained learning module based on the system component 102.

At step 830, the system or a system component 102 can be designed to receive operating parameter values as outputs from the comparing step 820 and input the operating parameters into the iteratively trained learning modules and process the operating parameters in one or more of the processes described above. In at least this way, the system can utilize an iteratively trained learning module to output specific corrective actions, including updated baseline settings, tailored to certain system components 102 of the connected system 100.

In one non-limiting example, if a monitored operating parameter shows the solar controller 308 for the solar panels 310 is continuously, or substantially continuously, powered on and calculating a power generation value, the system can run a training module 514 and determine the predicted daylight hours for the relevant geographic region where the connected system 100 is installed and provide a proposed corrective action that the solar controller 308 only monitors during the predicted daylight hours and enter into sleep-mode at night. In this example, the system can further recommend or activate a daylight sensor and automatically configure the proposed updated baseline settings for the solar controller 308 using the control system 500, central controller 104, deployment module 510, or other aspects of the connected system 100. In some embodiments, the updated baseline settings can be automatically configured directly with the solar controller 308 through the communication connection(s) 112 described herein. In another embodiment, the system could also utilize a combination of multiple training modules 514 where the system components 102 analyzed could include both the solar panels 310, solar controller 308, and the pool heater 312. In this embodiment, the output of the iteratively trained learning module could, for example, provide updated baseline settings to efficiently heat the pool while minimizing the run-time of the heater component when the solar panels 310 are estimated to provide adequate heating, or when the outside temperature is anticipated (or measured) to be high enough to heat the pool to the desired temperature. It will be appreciated by one skilled in the art that a combination of multiple system components 102 and analyzing multiple data sets and/or multiple sets of monitored operating parameters can be used in a single training loop to provide a customized corrective action recommendation(s) based on a high level of certainty.

In some embodiments, the baseline setting update process at step 840 can include intelligent configuration updates based on the output of an iteratively trained learning module. At step 840 the system can update the baseline settings according to the output of the training module 514 and store the updated baseline settings at step 850. In some embodiments, the updated baseline settings can then be used in the comparing step at 820. In some embodiments, the system determines an update should be pushed to one or more aspects of the system based on the output of the iteratively trained learning module and modifies a display and/or generates a custom notification based on the proposed update.

In some embodiments, the system can include one or more secondary metrics as operating parameters in the process of iteratively training a learning module(s) 514. When used throughout the present disclosure, one skilled in the art will understand that processes for an "iteratively trained learning module" can include machine learning processes, artificial intelligence processes, and other similar advanced machine learning processes. For example, the system and processes of the present disclosure can perform automatic configuration and re-configuration of system components, system or component updates, diagnostics, provide customized recommendations according to user data settings and preferences, generate custom reports, and similar processes. In some embodiments, the system can use additional inputs and/or feedback loops for an iterative training process.

In one non-limiting example, the system may detect and identify a new pool pump 302 that has not been configured with the connected system 100. The extracted data set can have the system component data indicating that the pool pump 302 has not been provided with a priming delay. The output of the data processing analytics (e.g., one or more of the processing modules, the iteratively trained learning module, other analytics processes, etc.) can configure the baseline setting for the pool pump 302 to include a priming delay. In some embodiments, this priming delay could be configured automatically at the initial configuration of the system component, and then the priming delay can be modified, adjusted, or removed based on the continued monitoring and update processes described herein.

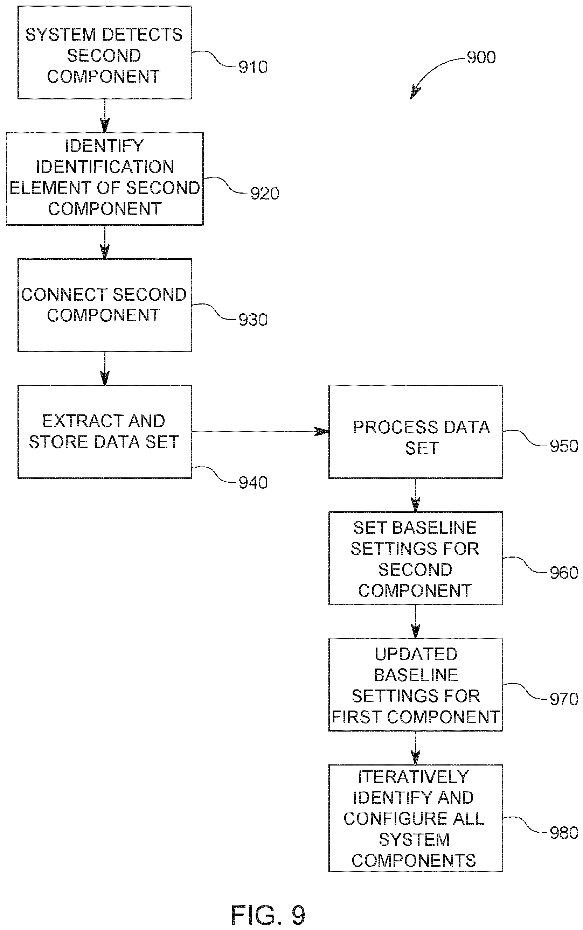

FIG. 9 illustrates a process 900 for connecting and configuring additional system components. In one embodiment, the connected system 100, or another system component 102, can detect the second component at step 910. The steps for detecting 910, identifying 920, connecting 930, and extracting and storing a data set 940 for a second component can include, in one example, the same steps and processes described in connection with the identification and detection processes of the system component 102 in FIGS. 6 and 7. In one embodiment, the identification element 114 of the second component is identified as being a unique identification element 114 and differentiating the system components 102 from one another, even if the system components 102 are the same type (e.g., two solar panels 310). Similarly, in one embodiment, the data sets extracted from each of the system components 102 upon detection/identification and/or configuration can be the same or different depending on the location, user data 520, system component data 518, third-party data 522, etc. for each system component 102 and installation configuration.

In one embodiment, at step 950, the data set processing can include using one or more training modules 514 to consider the recommended baseline settings not only based on the system component data 518 but also based on the operating parameters and configuration of the other connected system 100 aspects and other system components 102 of the connected system 100. For example, the system can monitor and detect head loss changes, monitor energy usage, temperature adjustments, etc., and provide proposed corrective action to update an operating schedule or other baseline setting modifications to improve the overall system performance by improving operating efficiency and minimizing energy usage/costs where possible. In some embodiments, the proposed corrective action(s) can be provided in the form of a customized report generated for the user.

At step 960 the baseline settings for the second component can be configured automatically using the central controller 104, control system 500, deployment module 510, or by directly communicating with the system component 102 and adjusting the baseline settings directly, as non-limiting examples. At step 970 the baseline settings for the first system component 102 can be updated according to the recommended corrective updates of the iteratively trained learning module to improve overall system performance and the performance of individual system components 102. The new operating parameters of the first system component 102 and the second system component 102 can be monitored after the updated baseline settings are configured and additional updates can be performed or recommended to further optimize the connected system 100.

The processes for connecting and configuring additional components can be repeated until all system components 102 are connected, configured, and updated accordingly. In some embodiments, the connected system 100 can continuously, substantially continuously, at pre-defined intervals, or according to a schedule, monitor and provide updates to the baseline settings of system components 102 as changes are detected throughout the connected system 100.

In some embodiments, the connected system 100 can make informed decisions and customized recommendations based on the system components 102 configured in the connected system 100. In a non-limiting example, the system can make an informed decision that the pool pump output could be improved by using a small sand filter. This recommendation can be transmitted to the user via a notification system that indicates the connected system 100 may operate with better performance if a small sand filter is used as this could limit the pool pump output so that it is not overpowered and would lose filtration effectiveness because of "channeling". In some embodiments, channeling can be an indication a pool pump 302 is too large for the filter 306 used, or the filter 306 is overloaded by bather load (e.g., bather waste and oils) or there is improper backwashing. Using information about all of the system components 102 on the pool pad, with additional information (e.g., the user data 520), the total dynamic head (TDH) can be accurately estimated and used to further optimize the system.

In some embodiments, the system can also include a user notification sequence process for generating notifications for one or more user devices 106. In one embodiment, the user notification sequence process can be used to generate notifications related to, but not limited to maintenance reminders, alerts regarding operating parameters of the system components, and other notifications.

In another embodiment, the connected system 100 or a system component 102 can determine if an identified issue or error involves third-party service, replacement parts, user self-repair, a remote restart of the equipment, or similar. If the solution does not involve third-party service or repair, the system can generate an alert that is pushed to the user according to a notification process. The alert can include data specific to the user data 520 associated with the system component 102 and can further include recommended audio and/or video tutorials customized to the specific system component 102 installed in the user's connected system 100 if the solution is a recommended user self-repair. The system can also be designed to determine if the self-repair or diagnosis involves new or replacement parts to resolve the issue. If the system determines that replacement components are involved to complete the recommended user self-repair, the system can automatically order new parts. In some embodiments, the new parts can be sent to a user's location and/or to the geographic location of the system components.

If the system determines that third-party service or repair is recommended, a customized notification alert can be generated according to the notification process and the user notification sequence can initiate the deployment module 510 and deployment process. In one embodiment, the notification sequence can contact the third party recommended from the deployment process or the iteratively trained learning module. In one embodiment, if the diagnostic process determines that replacement components are involved to complete the service request, the user notification system can be modified to order replacement components for the third-party servicer to utilize in the fulfillment of the service request.

In some embodiments, the third-party service can receive and/or retrieve data sets and other information from the control system 500, the system components, the central controller 104, the user device 106, or other aspects of the connected system 100. In some embodiments, the control system 500 can facilitate data transmission between the user device 106 and the third-party system 110. In some embodiments, the control system 500 or individual system components 102 can also record the information used and/or accessed by a technician during a service call and can send data sets related to the specific user or connected system 100, including but not limited to system component data 518, and user data 520. In some embodiments, an expert can generate a report or summary of a call for the user to access and view.

In some embodiments, the systems and processes described herein can include water chemistry tracking and the ability to view trends and reports over time. In some embodiments, the water chemistry tracking can include notes regarding standard values and/or recommendations to adjust the recorded water chemistry to be within the standard or acceptable level. It will be appreciated by one skilled in the art that water chemistry can also include but is not limited to, water quality and similar characteristics.

In some embodiments, the connected system 100 and system components 102 can be used to communicate maintenance reminders according to system component data 518 including manufacturer recommendations and usage reports. In some embodiments, the maintenance reminders can be generated based on industry standards. In some embodiments, the generated maintenance reminders can be toggled on/off, modified, deleted, or otherwise customized by the user and/or an expert. In some embodiments, the maintenance reminders can be categorized based on frequency (e.g., daily, weekly, monthly, annually, etc.). In some embodiments, the maintenance reminders can include integration with third-party systems 110 and/or third-party applications like, for example, a calendar or payment feature.

In some embodiments, the maintenance reminders can be customized according to specific features of a user's connected system 100. For example, the user can include in a user profile, information related to the type of pool filter 306 used (e.g., cartridge, sand, or diatomaceous earth, etc.), when a user has a spa or hot tub in their connected system 100, a pool material (e.g., fiberglass, vinyl, concrete, etc.), pool size (i.e. dimensions), pool type (e.g., in-ground, above-ground, infinity, lap pool, swim spa, hot tub or spa, etc.), sanitization method (e.g., chlorine, saltwater, ozone, UV, etc.); season type (e.g., year-round, summer, etc.). The user-specific information can be used to further customize maintenance reminders and can also be stored and used by the control system 500 for other analyses and processes as described herein. In some embodiments, the user can upload photos of the connected system 100 and the information can be transmitted to the control system 500 and used in the processes described herein. In some embodiments, a scanning device or other form of digital data capture device (e.g., a camera) can obtain image data and the system can use image processing techniques to extract parameter(s) or feature(s) from the image data to automatically detect and configure the system component(s) 102.

In some embodiments, the configuration processes described herein may be initiated by a user input (e.g., a user selecting "add new device"). In some aspects, the system may detect the system component 102 is connected and the processor can generate a prompt or other display interface to "Add" the component. In some embodiments, the system can generate an add screen or other display interface with configuration options for the user to select associated with the device. In some forms, the configuration options can be tailored to available features or settings associated with the system component 102.

In some forms, the system may generate a request message and broadcast the message looking for a specific system component 102 or type of system component 102 (e.g., a pump). If the pump is connected, a pump controller (or other transceiver coupled to the controller) can generate a response indicating the pump is connected and the system component data 518 associated with the pump can be transmitted to and/or retrieved by the system to facilitate the configuration process.

In some embodiments, a customized output of the system can include lifestyle content and guidance can be provided by the processes and systems described herein (e.g., pool party preparation, best practices for off-season pool care, etc.). In some embodiments, a video of the customized self-education library can be provided, such that maintenance reminders include written and/or video and/or audio instructions or other tutorials to assist the user in self-repair or self-maintenance activities. The education library can be further customized for a particular user, a particular system component, and/or a geographic location where the equipment is installed.

It should be noted that while the systems and methods disclosed and described above with respect to FIGS. 6-9 are directed to detecting, identifying, and monitoring the system components 102 shown in FIG. 3, similar systems and methods are contemplated with respect to additional ones of the system components 102 of the connected system 100, not shown in FIG. 3 as would be understood by those of ordinary skill in the art.

Additionally, the embodiments described herein are further directed to an improved system and methodology for automatically configuring system components 102 of a connected aquatic system to monitor the operating parameters and update the settings or operation of the system components 102 to improve overall system performance. These embodiments represent an advancement over the prior art for several reasons, including that the systems and methods are capable of automatically detecting, identifying, and configuring baseline systems without a manual input by the user. Additionally, the embodiments can include a method and system for automatically detecting and updating operating parameters or baseline systems of individual system components 102 to not only improve the system component's operation but also the overall system efficiency and performance. The embodiments can include measuring the operation and condition of components within a connected system 100, accumulating these measurements across a field of the connected system 100, performing statistical analysis on the accumulated measurements, performing advanced diagnostics, and producing one or more customized outputs.

In an embodiment, an integrated and advanced analytics system for processing and evaluating the operational state of the connected system 100 in a dependable, accurate, and efficient way is provided. The monitoring of the operational parameters of system components, in real-time, such that deterioration/degradation can be monitored and assessed with comparisons being made and allows for targeted preventative maintenance to be conducted before failure occurs. Additionally, historical and geographic data (in addition to other statistical reporting capabilities) can be used to further improve data analysis and provide customized recommendations not only tailored to a specific user and/or connected system 100 but also based on general information for users with similar usage patterns and/or in geographically similar locations. Moreover, unexpected failures or unfavorable operating conditions can be mitigated, allowing for preventative maintenance, and aiding in the diagnosis of faults. However, should sudden failures occur, the data obtained from the condition monitoring system also allows for the efficient locating of faults so that remedial actions can be targeted, which again saves time and resources.

Even if the terms "value, parameter, location, component, device, unit, set, module, controller, server, measuring device, sensor, network" and similar, are used in the singular or in a specific numeral form in the claims and the specification the scope of the system should not be restricted to the singular or the specific numeral form.

The connected aquatic system includes devices or equipment that are designed to be used with the aquatic system and/or can be located in water during operation (e.g., at least partially or entirely submerged) and/or on a pool pad or installed adjacent to the aquatic system. The system components, devices, or equipment can be used in any environment and can be embodied as an electrical connector and/or penetrator or advantageously as a wet connector/penetrator, or as a connector part. Moreover, the system components, devices, or equipment are advantageously employed in a high-voltage application and also can be used in a medium or low-voltage application.

Furthermore, the operational parameter can include a physical parameter, like pressure, temperature, current, voltage, etc., and the operational value can include an absolute or differential measurement or number obtained for one parameter. The operational values as used herein refer to the similar parameters gathered or provided at different points in time. Moreover, a selected location should be understood as a location where condition monitoring is especially of interest or relevant.

Further still, a derivative as used herein means a result of an operation performed on the operational value(s). The operation can be any operation feasible for a person skilled in the art, like a mathematical operation. The derivative can be, for example, a specific difference between at least two values, a special gradient of several values, or a selected pattern of several values. In embodiments, the term "predefined" should be understood as "selected beforehand" and/or as "being saved in a control unit to be recalled for the comparison". A reference as used herein can be any reference value or values feasible for a person skilled in the art. The reference can be a single value or multiple values or a specific correlation of several values.

According to an embodiment, the reference defines an abnormal behavior of the device and/or a part thereof. As a result, unstable and critical conditions of the device can be identified, and suitable measures can be initiated to stop or undo the problem(s). Abnormal behavior as used herein means a condition where an action should be initiated to act on the system component 102 or its current operational state and/or when the operation of the system component 102 deviates from an acceptable, secure, or ideal operation.

In a further embodiment, the system activates at least one compensating action by the sensor system in case of detection of abnormal behavior of the connected aquatic system or an aspect part thereof. A suitable measurement can be taken to prevent a non-advantageous and/or detrimental operation and thus possible damage of the system component 102 or parts thereof. In this context, a "compensating action" can include an action that alters the operation of the system component 102 or the connected system 100 or an aspect of the connected system 100 to correct the abnormal behavior and/or to limit or prevent damage to the underwater device or the system from the abnormal behavior. The compensating action can be any action feasible for a person skilled in the art, like a de-energizing of the system component, an initiation of a tighter maintenance regime, activation of a maintenance action, especially a preventative maintenance action, or a reduction of a current for the system component. The compensating action can be actuated or triggered by any mechanism or actor suitable for a person skilled in the art, like from a control system and/or a person monitoring a control system.

In some embodiments, the baseline settings for a system component 102 can be pre-configured by the factory, warehouse, manufacturer, dealer, or similar, based on the connected system 100 data collected and stored via a network 108. In some embodiments, a robotics system can be used to install and/or pre-configure the devices. In some embodiments, the robotics system may be provided in the form of a robotic arm designed to complete basic trenching, plumbing, and electrical tasks. In some embodiments, the robotics system can include a camera for visual indication of when a task is complete and/or for visual assistance in completing tasks. In one embodiment, the robotic system may be autonomous. The robotic system can also be provided with the option for manual override or remote control in addition to fully or partially autonomous operations.

In some embodiments, the data sets, including but not limited to the user data 520 and the system component data 518 can be tracked and stored using blockchain or a similar sequential system of recording data elements. In this example, the data sets and/or the processed data can be stored securely across a distributed network 108 and provide additional security features. In some embodiments, blockchain or similar technologies can store other information about the pool pad, including, for example, maintenance data and service life.

In one embodiment, each system component 102 can emit a signature radio frequency, which can be detected by the other system components 102, aspects of the connected system 100, or another connected device (e.g., automation hub or similar). These signatures can be used, in some embodiments, to detect, identify, and configure the system component.

One embodiment can include advanced scheduling features to improve the overall pool user experience based on user preferences, which in some embodiments can be detected automatically using the Internet of Things or other integrated automation systems.

In some embodiments, the system components 102 can be detected, identified, and configured automatically by a user taking a photo of a pool pad. In some embodiments, this can be completed through a mobile application, advanced vision technologies like virtual reality, augmented reality, smart glasses, cameras, etc.

In some embodiments, the system can automatically configure system components 102 to perform a task without a user input to individually configure the individual components or assign individual tasks to the system components. In this non-limiting example, the user could identify a task to be completed, and the system can identify the system components 102 associated with the task and adjust the configuration settings of the relevant system components 102 to efficiently execute the instructions to complete the task.

One embodiment, through modeling of the measured data sets, provides early warning and diagnostic information, to enable preventative actions to be undertaken or maintenance to be efficiently scheduled. The systems can be used with existing installations, using the sensors already present, or new installations could be provided with the components described herein.

It will be appreciated by those skilled in the art that while the system has been described above in connection with particular embodiments and examples, the system is not necessarily so limited and that numerous other embodiments, examples, uses, modifications, and departures from the embodiments, examples, and uses are intended to be encompassed by the claims attached hereto. The entire disclosure of each patent and publication cited herein is incorporated by reference as if each such patent or publication were individually incorporated by reference herein. Various features and advantages of the system are outlined in the following claims.

## Claims

1. A method for configuring a connected aquatic system, the method comprising:
receiving a data set including an identification element of a pool component and an operating parameter of the pool component;
extracting the identification element of the pool component using a processor of a central controller;
extracting the operating parameter of the pool component using the processor of the central controller;
initiating a configuration process to analyze the operating parameter of the pool component;
identifying a proposed update to the operating parameter based on an output of the configuration process;
initiating an update process to execute the proposed update; and
updating the operating parameter of the pool component based on the output of the update process.

2. The method for configuring the connected aquatic system of claim 1, wherein the configuration process includes:
determining if updated operating parameters are recommended to improve system performance for the connected aquatic system.

3. The method for configuring the connected aquatic system of claim 1 or 2, wherein the configuration process includes:
analyzing the operating parameter of the pool component using an advanced analytics module configured to determine a recommended operating parameter based on other pool components connected to the connected aquatic system.

4. The method for configuring the connected aquatic system of claim 3, wherein the advanced analytics module is provided in a form of an iteratively trained learning module.

5. The method for configuring the connected aquatic system of any one of claims 1 to 4, further comprising:
receiving user data including trend data, user preferences, a schedule, or a combination thereof.

6. The method for configuring the connected aquatic system of claim 5, wherein the configuration process analyses the user data when identifying the proposed update to the operating parameter.

7. The method for configuring the connected aquatic system of any one of claims 1 to 6, wherein the pool component is a first pool component with a first identification element, the data set is a first data set, and the operating parameter is a first operating parameter, the method further comprising:
receiving a second data set including a second identification element of a second pool component and a second operating parameter of the second pool component;
extracting the second identification element of the second pool component using the processor of the central controller;
extracting the second operating parameter of the second pool component using the processor of the central controller;
initiating the configuration process to analyze the second operating parameter of the second pool component based on the first operating parameter of the first pool component;
identifying the proposed update based on the output of the configuration process;
initiating the update process to execute the proposed update; and
updating the first operating parameter of the first pool component and the second operating parameter of the second pool component based on the output of the update process.

8. The method of configuring the connected aquatic system of claim 7, wherein the first pool component is configured to detect and identify the second pool component.

9. A connected aquatic equipment system, comprising:
a first pool component with a first identification element;
a second pool component with a second identification element;
a first sensing device designed to collect a first data set including operating parameters of the first pool component;
a second sensing device designed to collect a second data set including the operating parameters of the second pool component; and
a central controller designed to automatically detect and configure the first pool component and the second pool component based on the operating parameters of the first pool component and the second pool component.

10. The connected aquatic system of claim 9 further comprising:
a database configured to store user data;
an advanced analytics module of a server configured to process the user data to update a configuration setting of the first pool component and the second pool component.

11. The connected aquatic system of claim 10, wherein the advanced analytics module can be provided in a form of an iteratively trained learning module.

12. The connected aquatic system of any one of claims 9 to 11, further comprising:
a deployment module of a server configured to generate and transmit a notification to a third-party system using a notification module.

13. The connected aquatic system of claim 12, wherein the notification can include a service request to repair or replace the first pool component or the second pool component.

14. The connected aquatic system of any one of claims 9 to 13, wherein the first data set and the second data set are stored in a database provided in a form of a lookup table.

15. The connected aquatic system of claim 14, wherein the database can include:
an update lookup module configured to communicate with an advanced analytics module to determine whether the operating parameters should be updated; and
an output lookup module configured to store the operating parameters detected by the first sensing device and the second sensing device.
